# EUROPÄISCHE PATENTANMELDUNG

(11) **EP 1 310 688 A2**
(43) Veröffentlichungstag der Anmeldung: **14.05.2003**
(21) Anmeldenummer: 02017015.5
(22) Anmeldetag: 27.07.2002
(51) Int. Cl.: F16C 27/06

(54) **Lager**

(30) Priorität: 09.11.2001 DE 10154705
(71) Anmelder: Carl Freudenberg KG, 69469 Weinheim (DE)
(72) Erfinder: Mahling, Andreas, 79379 Müllheim (DE)

(57) **Zusammenfassung**

Lager, umfassend einen Innenring (1) und einen den Innenring (1) mit radialem Abstand umschließenden Außenring (2), wobei in dem durch den Abstand gebildeten Spalt (3) zumindest zwei Stützkörper (4, 5) angeordnet sind, die den Innen- (1) und den Außenring (2) in radialer Richtung elastisch nachgiebig in einer funktionstechnischen Reihenschaltung verbinden, wobei die Stützkörper (4, 5) als innerer (4) und äußerer Stützkörper (5) jeweils ringförmig ausgebildet sind, wobei der äußere Stützkörper (5) den inneren Stützkörper (4) außenumfangsseitig drehfest umschließt und wobei die Stützkörper (4, 5) ungebunden und in axialer Richtung verschiebbar zueinander angeordnet sind.

## Beschreibung

Die Erfindung betrifft ein Lager mit einem Innenring und einem den Innenring mit radialem Abstand umschließenden Außenring, die in radialer Richtung elastisch nachgiebig miteinander verbunden sind.

### Stand der Technik

Ein solches Lager ist aus der EP 0 544 986 B1 bekannt. Der Innenring und der Außenring sind koaxial zueinander angeordnet und durch ein Balgelement aus elastomerem Werkstoff in radialer Richtung elastisch nachgiebig verbunden. Das Balgelement weist ein Profil mit zumindest einer in axialer Richtung vorstehenden Falte auf und besteht aus einem thermoplastischen Elastomerwerkstoff.

Dabei ist allerdings zu beachten, dass ein funktionaler Zusammenhang zwischen der Schwingungsentkopplung in radialer Richtung und der axialen Verschiebbarkeit von Innen- und Außenring relativ zueinander besteht; die axial vorstehende Falte hat auf beide Funktionen Einfluss. Die Funktionen können nicht getrennt voneinander optimiert werden. Bei Verlagerungen von Innenring und Außenring, in axialer Richtung relativ zueinander, ist das Balgelement außerdem gebrauchsdauerverringernden Walk-Belastungen ausgesetzt, was im Hinblick auf gleichbleibend gute Gebrauchseigenschaften während einer langen Gebrauchsdauer wenig zufriedenstellend ist.

### Darstellung der Erfindung

Der Erfindung liegt die Aufgabe zugrunde, ein Lager der eingangs genannten Art derart weiterzuentwickeln, dass sich eine funktionale Trennung zwischen der Schwingungsentkopplung in radialer Richtung und der axialen Verschiebbarkeit von Innen- und Außenring relativ zueinander ergibt und dass deshalb beide Funktionen getrennt voneinander einfach und gut an die jeweiligen Gegebenheiten des Anwendungfalles anpassbar sind. Außerdem soll sich eine Erhöhung der Gebrauchsdauer bei gleichbleibend guten Gebrauchseigenschaften ergeben.

Diese Aufgabe wird erfindungsgemäß mit den Merkmalen von Anspruch 1 gelöst. Auf vorteilhafte Ausgestaltungen nehmen die Unteransprüche Bezug.

Zur Lösung der Aufgabe ist ein Lager vorgesehen, umfassend einen Innenring und einen den Innenring mit radialem Abstand umschließenden Außenring, wobei in dem durch den Abstand gebildeten Spalt zumindest zwei Stützkörper angeordnet sind, die den Innen- und den Außenring in radialer Richtung elastisch nachgiebig in einer funktionstechnischen Reihenschaltung verbinden, wobei die Stützkörper als innerer und äußerer Stützkörper jeweils ringförmig ausgebildet sind, wobei der äußere Stützkörper den inneren Stützkörper außenumfangsseitig drehfest umschließt und wobei die Stützkörper ungebunden und in axialer Richtung verschiebbar zueinander angeordnet sind. Durch die beiden in einer funktionstechnischen Reihenschaltung angeordneten Stützkörper kann das erfindungsgemäße Lager hinsichtlich der Schwingungsentkopplung in radialer Richtung besonders gut an die jeweiligen Gegebenheiten des Anwendungsfalles angepasst werden. Diese Anpassung erfolgt beispielsweise über die Dichte der Stützkörper, die Vorspannung, mit der sie innerhalb des durch den Abstand gebildeten Spalts zwischen Innenring und Außenring angeordnet sind und/oder durch die Geometrie der Stützkörper. Durch Veränderung dieser Parameter können beispielsweise Dämpfung oder Federkennung des Lagers an den jeweiligen Anwendungsfall angepasst werden. Außerdem ist von hervorzuhebendem Vorteil, dass eine axiale Verschiebung von Innenring und Außenring relativ zueinander stets im Wesentlichen kraftlos möglich ist, da die beiden Stützkörper ungebunden zueinander und in axialer Richtung verschiebbar angeordnet sind. Die beiden Stützkörper bilden eine Art Schiebeverzahnung. Eine solche axiale Verschiebbarkeit ist in vielen Anwendungfällen erforderlich, beispielsweise dann, wenn das erfindungsgemäße Lager als Antriebswellenlagerung zur Anwendung gelangt. Für eine derartige Lagerung ist einerseits eine elastische Nachgiebigkeit in radialer Richtung erforderlich, um betriebsbedingte Schwingungen, die von einer Antriebswelle in das Lager eingeleitet werden, beispielsweise vom Fahrzeugboden eines Kraftfahrzeugs fernzuhalten. Die drehfeste Zuordnung der beiden Stützkörper zueinander ist sinnvoll, um abrasiven Verschleiß im Bereich der Berührungsstellen der beiden Stützkörper zu verhindern. Die axiale Verschiebbarkeit der beiden Stützkörper zueinander wird benötigt, um beispielsweise axiale Wärmedehnungen der durch das Lager gelagerten Bauteile relativ zueinander und/oder betriebsbedingte Axialbewegungen der gelagerten Bauteile auszugleichen.

Zumindest einer der Stützkörper kann aus einem elastomeren Werkstoff bestehen. Elastomere Werkstoffe, wie beispielsweise NR, EPDM sind einfach und kostengünstig herstellbar und haben außerdem den Vorteil, dass sie über eine gute Temperaturstabilität, ein gutes Dämpfungsverhalten und gute Entkopplungseigenschaften verfügen.

Nach einer anderen Ausgestaltung besteht die Möglichkeit, dass zumindest einer der Stützkörper aus einem Schaumstoff besteht. Als Schaumstoff gelangt bevorzugt ein MCU-Schaum zur Anwendung, also ein Schaum aus mikrozellularem Urethan. Dieser Werkstoff ist federelastisch und in sich kompressibel und daher für eine einfache Montage des Lagers besonders gut geeignet. Außerdem können MCU-Schaumstoffe sehr fest und dadurch haltbar sein, was speziell für die Anwendung in einem Lager für Antriebswellen von Kraftfahrzeugen von hervorzuhebendem Vorteil ist.

Bevorzugt bestehen beide Stützkörper aus einem MCU-Schaum, wobei die Gebrauchseigenschaften über die Dichte, die Vorspannung und die Geometrie des Werkstoffs/des Stützkörpers einstellbar sind. Beide Stützkörper können dabei aus einem übereinstimmenden Werkstoff oder aus voneinander abweichenden Werkstoffen bestehen. Gleiche Werkstoffe mit übereinstimmenden Gebrauchseigenschaften werden bevorzugt dann gewählt, wenn es als notwendig angesehen wird, über den Umfang des Lagers nahezu gleichbleibende Eigenschaften in Hinsicht auf Dämpfung und Federkennung zu erzielen.

Demgegenüber können unterschiedliche Werkstoffe zur Anwendung gelangen, beispielsweise unterschiedliche MCU-Schaumstoffe. Eine derartige Kombination wird bevorzugt dann ausgewählt, wenn es als notwendig erscheint, mittels einer Reihenschaltung auf die Charakteristik, beispielsweise die Federkennlinie, Einfluss zu nehmen.

Die Stützkörper können auf den einander zugewandten Seiten jeweils eine Gleitfläche aufweisen, wobei die Gleitflächen einander unmittelbar anliegend berühren und wobei zumindest eine der Gleitflächen eine reibungsverringernde Oberflächenbeschichtung aufweisen kann. Die gegebenenfalls zur Anwendung gelangende Oberflächenbeschichtung bildet dann einen einstückigen Bestandteil des jeweiligen Stützkörpers, so dass zwischen dem Innenring und dem Außenring nur die beiden Stützkörper angeordnet sind. Eine reibungsverringernde Oberflächenbeschichtung, die beispielsweise aus einem PTFE-Lack bestehen kann, wird insbesondere dann zur Anwendung gelangen, wenn die Stützkörper aus Materialien mit hohem Reibungskoeffizient bestehen. Die Oberflächenbeschichtung verhindert in einem solchen Fall, dass die einander zugewandten Gleitflächen der Stützkörper bei axialer Verschiebung beschädigt und/oder zerstört werden. Für die meisten Anwendungsfälle ist es ausreichend, wenn die Gleitfläche nur eines Stützkörpers mit einer reibungsverringernden Oberflächenbeschichtung versehen ist. Eine einfache und kostengünstige Herstellbarkeit wird dadurch erleichtert.

Nach einer anderen Ausgestaltung besteht die Möglichkeit, dass die Stützkörper mittels eines Gleitrings in radialer Richtung aufeinander abgestützt sind. Der Gleitring kann beispielsweise aus einem PTFE-Compound bestehen und gehaftet an nur einem der Stützkörper befestigt sein. Eine solche Befestigung wird bevorzugt am inneren Stützkörper erfolgen, da die dem äußeren Stützkörper zugewandte Fläche des Gleitrings größer ist als die dem Innenring zugewandte Fläche; die mechanische Beanspruchung der äußeren Fläche des Gleitrings ist dadurch vergleichsweise geringer.

Der zusätzliche Gleitring gelangt bevorzugt dann zur Anwendung, wenn es zu besonders häufigen Axialbewegungen im Betrieb zwischen den Stützkörpern kommt.

Den zuvor genannten Vorteilen steht der Nachteil entgegen, dass der Gleitring ein separat herzustellendes und zu montierendes Bauteil ist. In Anbetracht der Vorteile für spezielle Anwendungfälle ist dieser Nachteil jedoch vernachlässigbar.

Der Innen- und/oder der Außenring können aus einem polymeren Werkstoff bestehen. Im Gegensatz zu Ringen, die aus einem metallischen Werkstoff bestehen, ist hierbei von Vorteil, dass derartige Ringe rostfrei sind. Außerdem haben die Ringe aus polymerem Werkstoff nur eine geringe Masse und sind einfach und kostengünstig herstellbar.

Der Innenring und der innere Stützkörper und/oder der Außenring und der äußere Stützkörper können kraft- und/oder formschlüssig miteinander verbunden sein. Bei einer nicht-gehafteten Befestigung der Stützkörper mit den radial angrenzenden Ringen ist von Vorteil, dass das gesamte Lager im Anschluss an seine Verwendung demontiert und sortenrein recycelt werden kann. Außerdem sind Verschleißteile einfach austauschbar. So besteht beispielsweise die Möglichkeit, den inneren und/oder den äußeren Stützkörper zu erneuern, ohne den Innenring und/oder den Außenring ebenfalls austauschen zu müssen. Eine formschlüssige Verbindung von Innenring und innerem Stützkörper und/oder Außenring und äußerem Stützkörper kann beispielsweise dadurch erfolgen, dass der Innenring und/oder der Außenring eine Hinterschneidung aufweisen, in die der innere Stützkörper und/oder der äußere Stützkörper einschnappbar sind. Eine kraftschlüssige Verbindung kann dadurch hergestellt werden, dass der Innenring und der innere Stützkörper und/oder der Außenring und der äußere Stützkörper durch eine Presspassung miteinander verbunden sind.

Der Innenring kann mit einem Wälzlager oder einem Gleitlager jeweils eine vormontierbare Einheit bilden. Wälzlager gelangen bevorzugt dann zur Anwendung, wenn das Lager beispielsweise als Antriebswellenlagerung in Kraftfahrzeugen zur Anwendung gelangen soll. Demgegenüber gelangen Gleitlager zur Anwendung, wenn der Einbauraum in radialer Richtung nur knapp bemessen ist, so dass handelsübliche Wälzlager wegen ihrer großen Bauhöhe in radialer Richtung nicht zur Anwendung gelangen können. Durch die Zusammenfassung des Innenrings mit dem Wälzlager oder dem Gleitlager zu der jeweils vormontierbaren Einheit, ist die Montage des erfindungsgemäßen Lagers durch einen teilearmen Aufbau wesentlich vereinfacht, wobei die Montage der vormontierbaren Einheit dann besonders einfach ist, wenn das Wälz- oder Gleitlager einschnappbar mit dem Innenring verbunden ist.

### Kurzbeschreibung der Zeichnung

Der Gegenstand der Erfindung wird nachfolgend anhand der Figuren 1 bis 6 weiter verdeutlicht.

Es zeigen:
- Fig. 1: Ein erstes Ausführungsbeispiel eines Lagers in quergeschnittener Darstellung,
- Fig. 2: das Lager aus Fig. 1 in längsgeschnittener Darstellung,
- Fig. 3: ein zweites Ausführungsbeispiel eines Lagers in quergeschnittener Darstellung,
- Fig. 4: das Lager aus Fig. 3 in längsgeschnittener Darstellung,
- Fig. 5: ein drittes Ausführungsbeispiel eines Lagers in quergeschnittener Darstellung und
- Fig. 6: das Lager aus Fig. 5 in längsgeschnittener Darstellung.

### Ausführung der Erfindung

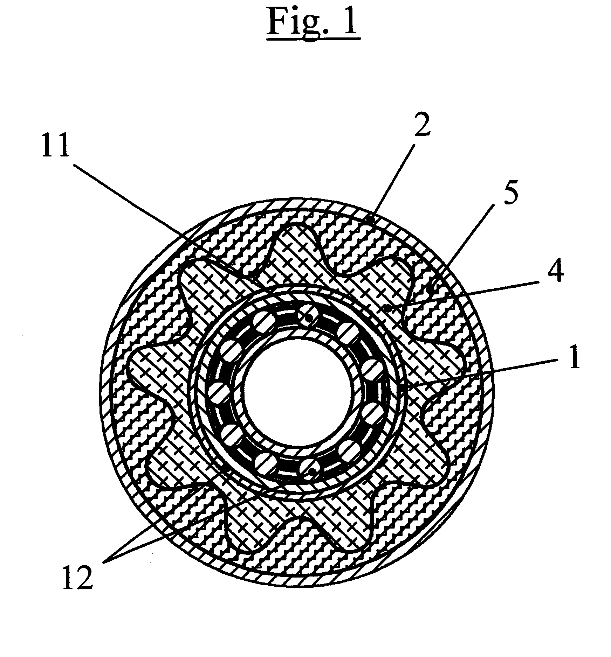

In den Figuren 1 bis 6 sind drei Ausführungsbeispiele eines Lagers gezeigt, wobei die Lager als Antriebswellenlager in Kraftfahrzeugen zur Anwendung gelangen. Die Lager aus den drei Ausführungsbeispielen umfassen jeweils einen Innenring 1, der mit radialem Abstand von einem Außenring 2 umschlossen ist. Sowohl der Innenring 1 als auch der Außenring 2 bestehen in den Ausführungsbeispielen aus einem polymeren, zähharten Werkstoff. In dem durch den Abstand gebildeten Spalt 3 sind zwei Stützkörper 4, 5 angeordnet, durch die der Innen- 1 und der Außenring 2 in radialer Richtung elastisch nachgiebig aufeinander abgestützt sind. In radialer Richtung betrachtet, sind die beiden Stützkörper 4, 5 in einer funktionstechnischen Reihenschaltung angeordnet. Der Innenring 1, der Außenring 2 und die Stützkörper 4, 5 sind konzentrisch zueinander angeordnet und kreisringförmig ausgebildet. Die einander zugewandten Oberflächen der beiden Stützkörper 4, 5, also der Innenumfang des Außenrings 2 und der Außenumfang des Innenrings 1, sind demgegenüber, im Querschnitt betrachtet, in Umfangsrichtung wellenförmig ausgebildet, so dass sich eine im Wesentlichen durch Formschluss erzeugte drehfeste Zuordnung der beiden Stützkörper 4, 5 aneinander ergibt, obwohl diese einander ungebunden und in axialer Richtung verschiebbar zugeordnet sind.

Die Stützkörper 4, 5 können aus einem elastomeren Werkstoff bestehen oder, wie in den gezeigten Ausführungsbeispielen, aus einem mikrozellularen Urethanschaum (MCU-Schaum).

Die möglichst reibungsarme und deshalb im Wesentlichen kraftlose axiale Verschieblichkeit der beiden Stützkörper 4, 5 relativ zueinander ist erforderlich, um betriebsbedingte Längenänderungen der gelagerten Welle - und damit des Innenrings 1 bezogen auf den Außenring 2 - und/oder eines hier nicht dargestellten Gehäuses ausgleichen zu können. Von entscheidender Wichtigkeit ist, dass die Mittel zur Abstützung von Innenring 1 und Außenring 2 aufeinander ausschließlich einer radialen Druckbelastung, nicht jedoch gebrauchsdauerverringernden Schub-/Scherbelastungen ausgesetzt sind.

In den hier gezeigten Ausführungsbeispielen bilden die gezeigten Wälzlager 11 und Gleitlager 13 mit dem Innenring 1 jeweils eine vormontierbare Einheit 12, 14, wobei die Wälz- 11 oder Gleitlager 13 einschnappbar, d.h. formschlüssig mit dem Innenring 1 verbunden sind.

Auch die beiden Stützkörper 4, 5 sind ungehaftet mit den radial jeweils angrenzenden Ringen 1, 2 verbunden, so dass bei Verschleiß und/oder Beschädigung die Einzelteile separat austauschbar sind.

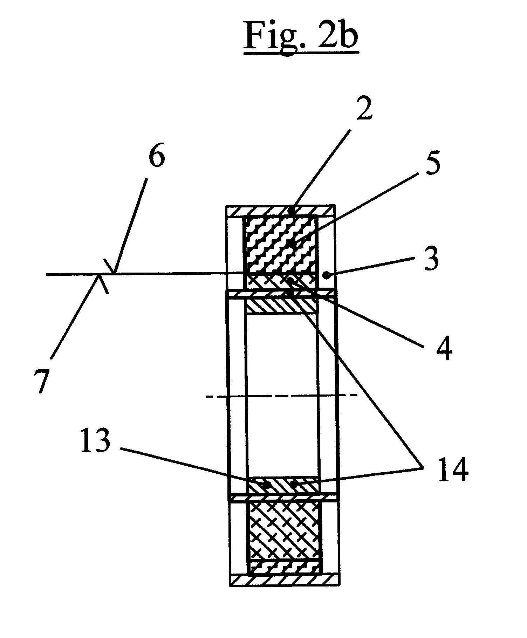

In den Figuren 1, 2 a und 2 b ist ein erstes Ausführungsbeispiel des Lagers gezeigt. Der äußere Stützkörper 5 umschließt den inneren Stützkörper 4, außenumfangsseitig drehfest, wobei die Stützkörper 4, 5 mit ihren Gleitflächen 6, 7 in axialer Richtung verschiebbar aufeinander abgestützt sind. In dem hier gezeigten Ausführungsbeispiel berühren die Gleitflächen 6, 7 der Stützringe 4, 5 einander unmittelbar anliegend.

Figur 2 a unterscheidet sich von Figur 2 b ausschließlich dadurch, dass in Figur 2 a eine vormontierbare Einheit 12 zur Anwendung gelangt, die aus dem Innenring 1 und dem Wälzlager 11 besteht und in Figur 2 b eine vormontierbare Einheit 14, die den Innenring 1 und ein Gleitlager 13 umfasst.

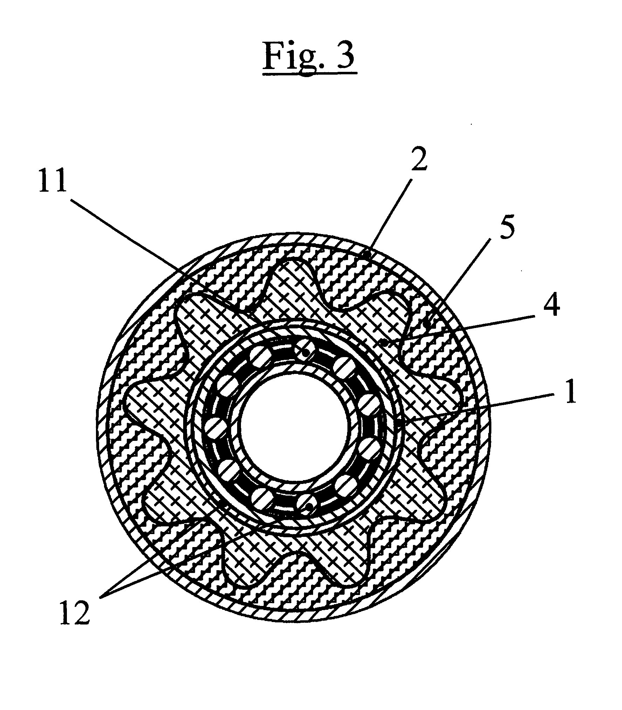

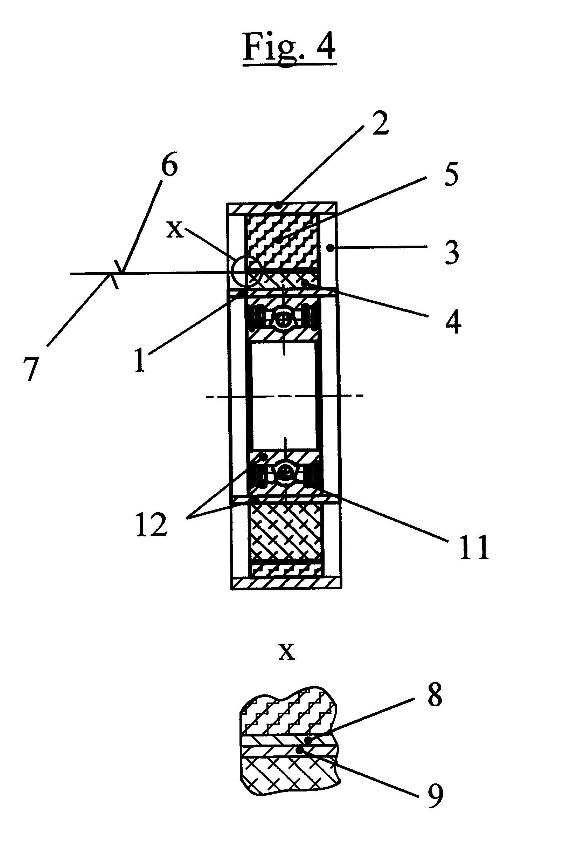

In den Figuren 3 und 4 ist ein Lager gezeigt, ähnlich dem Lager aus den Figuren 1 und 2 a, wobei beide Gleitflächen 6, 7 der Stützkörper 4, 5 jeweils mit einer reibungsverringernden Oberflächenbeschichtung 8, 9 versehen sind, beispielsweise mit einer Oberflächenbeschichtung 8, 9 aus PTFE. Abweichend von der hier gezeigten Ausführungsform besteht auch die Möglichkeit, nur eine der Gleitflächen 6, 7 mit einer Oberflächenbeschichtung 8, 9 zu versehen.

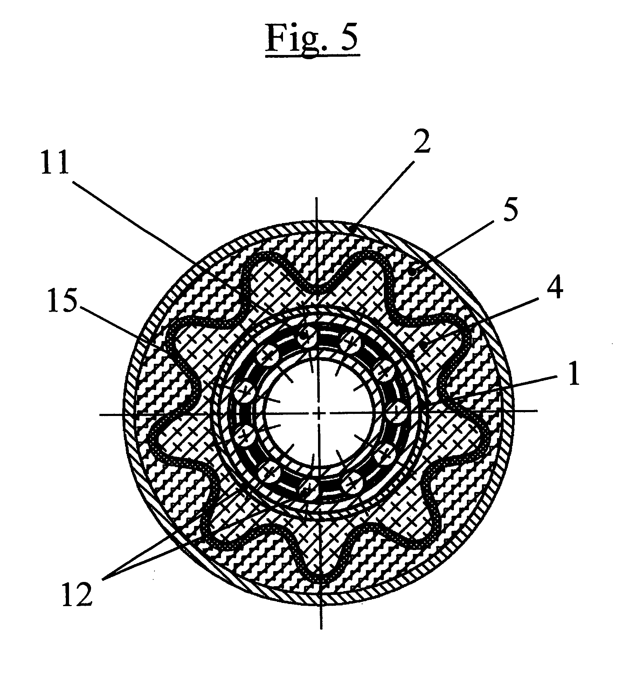

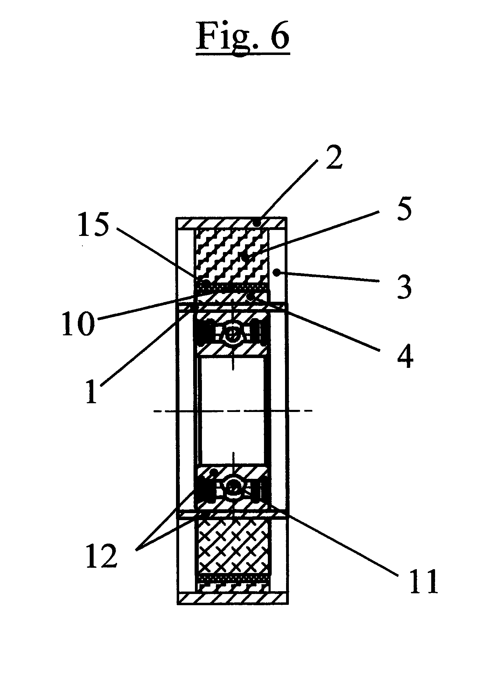

Das Ausführungsbeispiel Figuren 5 und 6 unterscheidet sich von den zuvor beschriebenen Ausführungsbeispielen dadurch, dass die Stützkörper 4, 5 mittels eines Gleitrings 10, der in diesem Ausführungsbeispiel durch einen PTFE-Ring gebildet ist, in radialer Richtung elastisch nachgiebig aufeinander abgestützt sind. Der Gleitring ist bevorzugt mit dem Innenring 1 ortsfest verbunden, beispielsweise verklebt. Die Verschieblichkeit in axialer Richtung wird dadurch sichergestellt, dass die Außenumfangsfläche 15 des Gleitrings 10 der Gleitfläche 7 des äußeren Stützkörpers 5 ungehaftet und in axialer Richtung verschiebbar zugeordnet ist. Bei einer solchen Ausführung ist von Vorteil, dass für den Innenring auch Materialien zur Anwendung gelangen können, die einen außerordentlich hohen Reibungskoeffizienten und/oder eine besonders empfindliche Oberfläche aufweisen.

Umgekehrt besteht auch die Möglichkeit, den Gleitring 10 mit der Innenumfangsfläche des äußeren Stützkörpers 5 zu verbinden; die Relativbewegung in axialer Richtung erfolgt dann zwischen der Innenumfangsfläche des Gleitrings 10 und der Außenumfangsfläche des inneren Stützkörpers 4.

## Patentansprüche

1. Lager, umfassend einen Innenring (1) und einen den Innenring (1) mit radialem Abstand umschließenden Außenring (2), wobei in dem durch den Abstand gebildeten Spalt (3) zumindest zwei Stützkörper (4, 5) angeordnet sind, die den Innen- (1) und den Außenring (2) in radialer Richtung elastisch nachgiebig in einer funktionstechnischen Reihenschaltung verbinden, wobei die Stützkörper (4, 5) als innerer (4) und äußerer Stützkörper (5) jeweils ringförmig ausgebildet sind, wobei der äußere Stützkörper (5) den inneren Stützkörper (4) außenumfangsseitig drehfest umschließt und wobei die Stützkörper (4, 5) ungebunden und in axialer Richtung verschiebbar zueinander angeordnet sind.

2. Lager nach Anspruch 1, **dadurch gekennzeichnet, dass** zumindest einer der Stützkörper (4, 5) aus einem elastomeren Werkstoff besteht.

3. Lager nach Anspruch 1, **dadurch gekennzeichnet, dass** zumindest einer der Stützkörper (4, 5) aus einem Schaumstoff besteht.

4. Lager nach einem der Ansprüche 1 bis 3, **dadurch gekennzeichnet, dass** die Stützkörper (4, 5) auf den einander zugewandten Seiten jeweils eine Gleitfläche (6, 7) aufweisen, dass die Gleitflächen (6, 7) einander unmittelbar anliegend berühren und dass zumindest eine der Gleitflächen (6, 7) eine reibungsverringernde Oberflächenbeschichtung (8, 9) aufweist.

5. Lager nach einem der Ansprüche 1 bis 3, **dadurch gekennzeichnet, dass** die Stützkörper (4, 5) mittels eines separat erzeugten Gleitrings (10) in radialer Richtung aufeinander abgestützt sind.

6. Lager nach einem der Ansprüche 1 bis 5, **dadurch gekennzeichnet, dass** der Innen- (1) und/oder der Außenring (2) aus einem polymeren Werkstoff bestehen.

7. Lager nach einem der Ansprüche 1 bis 6, **dadurch gekennzeichnet, dass** der Innenring (1) und der innere Stützkörper (4) und/oder der Außenring (2) und der äußere Stützkörper (5) kraft- und/oder formschlüssig miteinander verbunden sind.

8. Lager nach einem der Ansprüche 1 bis 7, **dadurch gekennzeichnet, dass** der Innenring (1) mit einem Wälzlager (11) eine vormontierbare Einheit (12) bildet.

9. Lager nach einem der Ansprüche 1 bis 7, **dadurch gekennzeichnet, dass** der Innenring (1) mit einem Gleitlager (13) eine vormontierbare Einheit (14) bildet.

10. Lager nach einem der Ansprüche 1 bis 9, **dadurch gekennzeichnet, dass** das Wälz- (11) oder Gleitlager (13) einschnappbar mit dem Innenring (1) verbunden ist.
